# EUROPEAN PATENT APPLICATION

(11) **EP 4 797 332 A1**
(43) Date of publication of application: **26.08.2026**
(21) Application number: 26157951.0
(22) Date of filing: 11.02.2026
(51) Int. Cl.: H01M 4/02, H01M 4/70, H01M 4/78, H01M 50/406, H01M 50/463, H01M 50/533, H01M 10/0585, H01M 50/103, H01M 50/176, H01M 50/55, H01M 50/562, H01M 50/553

(54) **SECONDARY BATTERY**

(30) Priority: 19.02.2025 KR 20250021676
(71) Applicant: SAMSUNG SDI CO., LTD., Yongin-si, Gyeonggi-do 17084 (KR)
(72) Inventor: JEON, Kiyoun, 17084 Yongin-si, Gyeonggi-do (KR)
(74) Representative: Bardehle Pagenberg Partnerschaft mbB Patentanwälte Rechtsanwälte

(57) **Abstract**

A secondary battery includes: an electrode assembly including: a first electrode, a second electrode, and a separator between the first electrode and the second electrode; a first horizontal portion at one end of the electrode assembly; and a second horizontal portion having a step difference relative to the first horizontal portion; a can accommodating the electrode assembly; and a first electrode tab connected to the first electrode. The second electrode is coupled to the can.

## Description

### BACKGROUND

### 1. Field

Aspects of embodiments of the present disclosure relate to a secondary battery.

### 2. Description of the Related Art

Unlike primary batteries that are not designed to be (re)charged, secondary (or rechargeable) batteries are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the electrode assembly, and electrode terminals connected to the electrode assembly.

Because a secondary battery having a high energy density (e.g., an amount of energy that can be stored per unit volume) may provide a longer operating time for a portable device or a longer driving distance for an electric vehicle, the energy density of a secondary battery may be an important factor that determine the performance of the secondary battery. Accordingly, an increase in energy density by improving a structure of the case of the secondary battery may be desired.

The above information disclosed in this Background section is for enhancement of understanding of the background of the present disclosure, and therefore, it may contain information that does not constitute related (or prior) art.

### SUMMARY

Embodiments of the present disclosure may be directed to a secondary battery in which an electrode assembly is additionally disposed in a remaining inner space of a can of the secondary battery, thereby improving an energy density.

The above and other aspects and features of the present disclosure will be described in, or will be apparent from, the following description of some embodiments of the present disclosure.

According to one or more embodiments of the present disclosure, a secondary battery includes: an electrode assembly including: a first electrode, a second electrode, and a separator between the first electrode and the second electrode; a first horizontal portion at one end of the electrode assembly; and a second horizontal portion having a step difference relative to the first horizontal portion; a can accommodating the electrode assembly; and a first electrode tab connected to the first electrode. The second electrode is coupled to the can.

In an embodiment, the second horizontal portion may protrude beyond the first horizontal portion in a direction perpendicular to an upper surface of the first horizontal portion.

In an embodiment, the first electrode tab may be on the first horizontal portion.

In an embodiment, the secondary battery may further include: a first electrode terminal on one surface of the can, and the first electrode tab may be connected to the first electrode terminal.

In an embodiment, the first electrode tab may be bent in a space between the first horizontal portion and the first electrode terminal.

In an embodiment, the first electrode terminal may include: a terminal portion inserted into a through-hole penetrating the one surface of the can; a gasket inserted into the through-hole to insulate the terminal portion from the can; a terminal plate connected to the terminal portion inside the can; and an insulating plate between the can and the terminal plate to insulate the terminal plate from the can.

In an embodiment, the first electrode tab may be connected to the terminal plate.

In an embodiment, the second horizontal portion may not contact the terminal plate.

In an embodiment, a length of the second horizontal portion in a direction parallel to an upper surface of the second horizontal portion may be greater than a length of the first horizontal portion in a direction parallel to an upper surface of the first horizontal portion.

In an embodiment, the can may include a metallic material, and the metallic material may include at least one of aluminum, an aluminum alloy, or stainless steel.

In an embodiment, a substrate of the second electrode may be welded to the can.

According to one or more embodiments of the present disclosure, a secondary battery includes: an electrode assembly including: a first electrode, a second electrode, and a separator between the first electrode and the second electrode; a first horizontal portion at one end of the electrode assembly; a second horizontal portion having a first step difference relative to the first horizontal portion; and a third horizontal portion having a second step difference relative to the second horizontal portion; a can accommodating the electrode assembly; and a first electrode tab connected to the first electrode. The second electrode is coupled to the can.

In an embodiment, the second horizontal portion may be located between the first horizontal portion and the third horizontal portion.

In an embodiment, the second horizontal portion may protrude beyond the first horizontal portion in a direction perpendicular to an upper surface of the first horizontal portion, and the third horizontal portion may protrude beyond the second horizontal portion in the direction perpendicular to the upper surface of the first horizontal portion.

In an embodiment, the first electrode tab may be located on the first horizontal portion.

In an embodiment, the secondary battery may further include: a first electrode terminal on one surface of the can, and the first electrode tab may be connected to the first electrode terminal.

In an embodiment, the first electrode terminal may include: a terminal portion inserted into a through-hole penetrating the one surface of the can; a gasket inserted into the through-hole, and insulating the terminal portion from the can; a terminal plate connected to the terminal portion inside the can; and an insulating plate between the can and the terminal plate to insulate the terminal plate from the can.

In an embodiment, the first electrode tab may be connected to the terminal plate.

In an embodiment, the second horizontal portion and the third horizontal portion may not contact the terminal plate.

In an embodiment, a substrate of the second electrode may be welded to the can.

According to some embodiments of the present disclosure, by forming (e.g., shaping) an electrode assembly so that the electrode assembly may be additionally placed in a remaining inner space of a can of the secondary battery, the secondary battery having an improved energy density may be provided.

According to some embodiments of the present disclosure, by employing a can formed of a metal as an exterior material of the secondary battery, a detachment of the secondary battery may be facilitated.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

### BRIEF DESCRIPTION OF DRAWINGS

The above and other aspects and features of the present disclosure will be more clearly understood from the following detailed description of the illustrative, non-limiting embodiments with reference to the accompanying drawings.
FIG. 1 is an exploded perspective view illustrating a secondary battery according to some embodiments of the present disclosure.
FIG. 2 is a cross-sectional view illustrating a secondary battery according to some embodiments of the present disclosure.
FIG. 3 illustrates an enlarged view of the region A of FIG. 2.
FIG. 4 is a cross-sectional view illustrating the secondary battery of FIG. 2 viewed from a B direction.
FIG. 5 is a cross-sectional view illustrating the secondary battery of FIG. 2 viewed from a C direction.
FIG. 6 is a cross-sectional view illustrating the secondary battery of FIG. 2 viewed from an E direction.
FIG. 7 is a cross-sectional view illustrating a secondary battery according to some embodiments of the present disclosure.
FIG. 8 is a cross-sectional view illustrating a secondary battery according to some embodiments of the present disclosure.
FIG. 9 illustrates a method for manufacturing an electrode assembly according to some embodiments of the present disclosure.
FIG. 10 illustrates an electrode assembly that is assembled by the manufacturing method of FIG. 9.
FIG. 11 is a flowchart illustrating a method for manufacturing a secondary battery according to some embodiments of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

References to two compared elements, features, and the like as being "the same" as each other may mean that they are "substantially the same" as each other. Thus, the phrase "substantially the same" as each other may include a case having a deviation or a variation that is considered low in the art, for example, such as a deviation or a variation of 5% or less. In addition, when a certain parameter is referred to as being uniform in a given region, it may mean that it is uniform in terms of an average.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

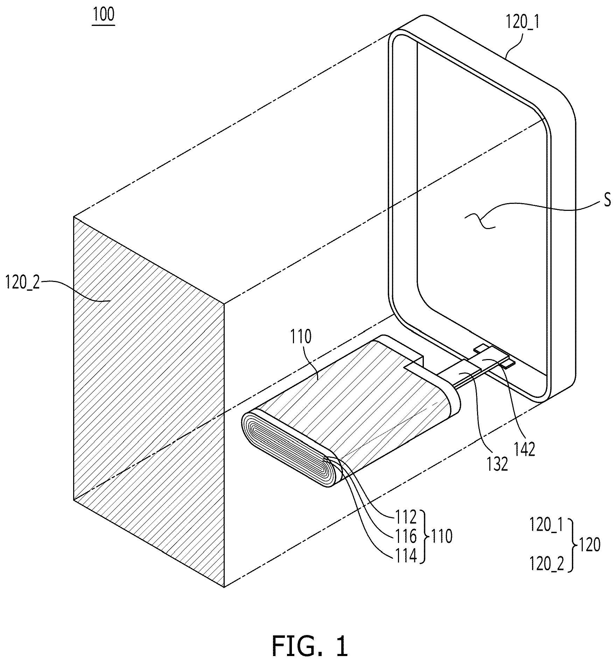

FIG. 1 is an exploded perspective view illustrating a secondary battery 100 according to some embodiments of the present disclosure.

Referring to FIG. 1, the secondary battery 100 may include an electrode assembly 110, and a can 120 to accommodate the electrode assembly 110. The electrode assembly may include a first electrode 112, a second electrode 114, and a separator 116 disposed between the first electrode 112 and the second electrode 114. The can 120 may include a body 120_1 having a receiving portion S, in which the electrode assembly 110 is to be received, and a cover 120_2 coupled to the body 120_1 so as to seal the receiving portion S.

The electrode assembly 110 may be formed by winding or stacking the first electrode 112 corresponding to a positive electrode and the second electrode 114 corresponding to a negative electrode, with the separator 116 interposed therebetween. The secondary battery 100 is not limited to that illustrated in FIG. 1, and may be implemented in various suitable kinds of secondary batteries.

The positive electrode and the negative electrode may each include a coating portion, in which an active material is coated on a thin metal foil current collector, and an uncoated portion where the active material is not coated. The positive electrode and the negative electrode may be wound with the separator, which is an insulator, interposed therebetween. However, the present disclosure is not limited thereto, and the electrode assembly may also have a suitable structure in which a plurality of sheet-kind of positive and negative electrodes are alternately stacked with the separator interposed therebetween.

The positive electrode for a rechargeable lithium battery may include a current collector, and a positive electrode active material layer on the current collector. The positive electrode active material layer may include a positive electrode active material, and may further include a binder and/or a conductive material (e.g., an electrically conductive material).

For example, the positive electrode may further include an additive that may serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles to each other, and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as some non-limiting examples.

The conductive material may be used to impart s conductivity (e.g., an electrical conductivity) to the electrode. Any suitable material that does not cause a chemical change (e.g., that does not cause an undesirable chemical change in the rechargeable lithium battery) and conducts electrons may be used in the battery. Examples of the conductive material may include a carbon-based material, such as natural graphite, artificial graphite, carbon black, acetylene black, ketjen black, a carbon fiber, a carbon nanofiber, and carbon nanotube, a metal-based material containing copper, nickel, aluminum, silver, and/or the like in a form of a metal powder or a metal fiber, a conductive polymer, such as a polyphenylene derivative, or a suitable mixture thereof.

Aluminum (Al) may be used as the current collector, but the present disclosure is not limited thereto.

The separator may include polyethylene, polypropylene, polyvinylidene fluoride, or a multilayered film of two or more layers thereof, and a mixed multilayered film, such as a polyethylene/polypropylene two-layered separator, a polyethylene/polypropylene/polyethylene three-layered separator, a polypropylene/polyethylene/polypropylene three-layered separator, and/or the like.

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles to each other, and also to attach the negative electrode active material to the current collector. The binder may include a non-aqueous binder, an aqueous binder, a dry binder, or a suitable combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a suitable combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and/or a suitable combination thereof.

When an aqueous binder is used as the negative electrode binder, a cellulose-based compound capable of imparting a viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a suitable combination thereof.

The conductive material may be used to impart a conductivity (e.g., an electrical conductivity) to the electrode. Any suitable material that does not cause a chemical change (e.g., that does not cause an undesirable chemical change in the rechargeable lithium battery) and that conducts electrons may be used in the battery. Non-limiting examples thereof may include a carbon-based material, such as natural graphite, artificial graphite, carbon black, acetylene black, ketjen black, a carbon fiber, a carbon nanofiber, and a carbon nanotube, a metal-based material including copper, nickel, aluminum, silver, and/or the like in a form of a metal powder or a metal fiber, a conductive polymer, such as a polyphenylene derivative, or a suitable mixture thereof.

The negative current collector may include a copper foil, a nickel foil, a stainless steel foil, a titanium foil, a nickel foam, a copper foam, a polymer substrate coated with a conductive metal, or a suitable combination thereof.

The porous substrate may be a polymer film formed of any one selected polymer polyolefin, such as polyethylene and/or polypropylene, polyester, such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, polytetrafluoroethylene, a suitable copolymer, or a suitable mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and/or a suitable combination thereof, but the present disclosure is not limited thereto.

The organic material and the inorganic material may be mixed in one coating layer, or a coating layer including an organic material and a coating layer including an inorganic material may be stacked.

The secondary battery 100 may further include a first substrate tab 132 formed on the first electrode 112, and a first electrode tab 142 connected to the first substrate tab 132. In an example, the first substrate tab 132 may be formed by punching out an uncoated portion of the first electrode 112. The first electrode tab 142 may be coupled to the first substrate tab 132 and connected to the first electrode 112. The first electrode tab 142 and the first substrate tab 132 may be coupled to each other by welding. The first electrode tab 142 may serve as a current flow path of the first electrode 112. In an embodiment, the first substrate tab 132 may be omitted as needed or desired.

The can 120 forms an overall external appearance of the secondary battery 100, and may be formed of a conductive metal, such as aluminum, an aluminum alloy, or steel plated with nickel. The can 120 may include a metallic material, such as stainless steel (SUS) or aluminum (Al). However, the present disclosure is not limited thereto, and the can 120 may be formed of various suitable metallic materials that satisfy a required or desired strength and resistance to an external impact for the secondary battery 100.

In some embodiments, the can 120 may include the body 120_1 having the receiving portion S formed therein so that the electrode assembly 110 may be accommodated. The receiving portion S of the body 120_1 may be formed so as to provide an internal space in which the electrode assembly 110 is accommodated, for example, by press processing. A planar shape of the receiving portion S of the can 120 may be, for example, rectangular or substantially rectangular.

The can 120 may further include the cover 120_2 that is welded to the body 120_1 to seal the open end of the receiving portion S. The cover 120_2 may be formed as a flat plate disposed on an upper portion of the can 120, so as to seal the receiving portion S. For example, the cover 120_2 may be formed as a flat plate having a suitable size sufficient to cover the body 120_1, and may come into surface contact with the body 120_1. By coupling the body 120_1 and the cover 120_2 to each other, a single joined structure may be formed. The body 120_1 may be coupled to the cover 120_2 by laser welding. However, the present disclosure is not limited thereto, and various coupling methods capable of sealing the can 120 may be employed. For example, the cover 120_2 and the body 120_1 may be joined to each other not only by laser welding, but also by ultrasonic welding, brazing, laser brazing, welding, soldering, or the like. The body 120_1 and the cover 120_2 may be formed of the same metallic material as each other. For example, the metallic material may include at least one of aluminum, an aluminum alloy, or stainless steel.

In some embodiments, the can 120 may further include an electrolyte injection port. For example, the electrolyte injection port may be a through-hole formed on at least one side surface of the can 120, and may be formed to inject an electrolyte into the can 120 after the body 120_1 and the cover 120_2 are coupled to each other and sealed. After the electrolyte is injected, the electrolyte injection port may be sealed with a sealing member.

The secondary battery 100 may be, for example, a lithium battery cell or a sodium battery cell. However, the present disclosure is not limited thereto, and the secondary battery 100 may include all kinds of suitable batteries capable of repeatedly providing electric power through charging and discharging. In an embodiment, if (e.g., when) the secondary battery 100 is a lithium battery cell, it may be used in an electric vehicle (EV) due to having excellent lifespan characteristics and a high-rate performance. For example, the secondary battery 100 may be used in a plug-in hybrid electric vehicle (PHEV) or another kind of hybrid vehicle. In some embodiments, a lithium battery cell may be used in various suitable fields requiring or desiring power storage in a wide range, such as smartphones, tablet PCs, electric bicycles, and electric power tools, without being particularly limited thereto.

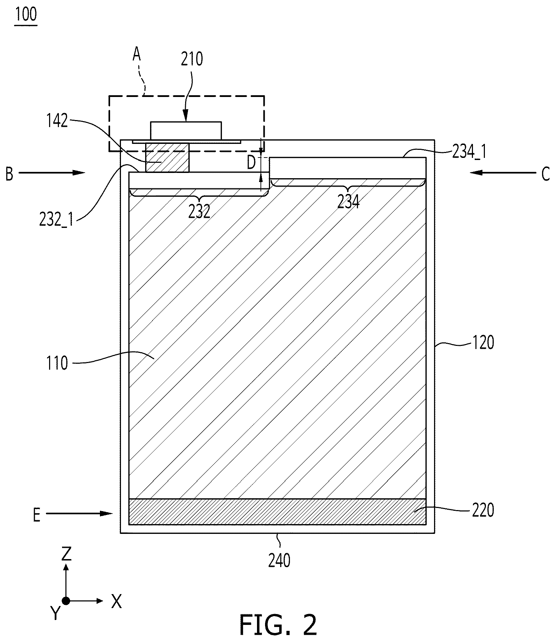

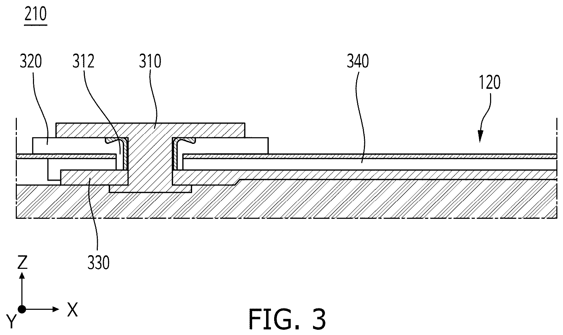

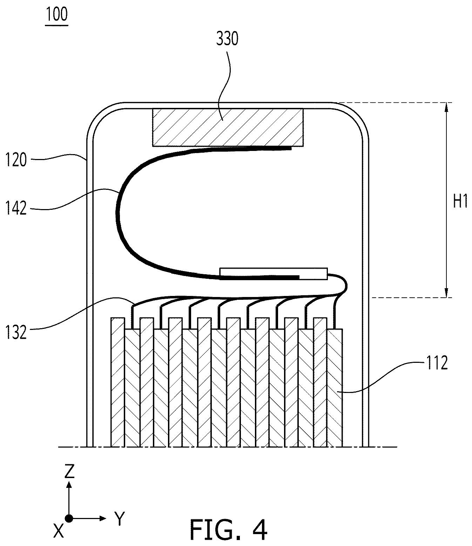

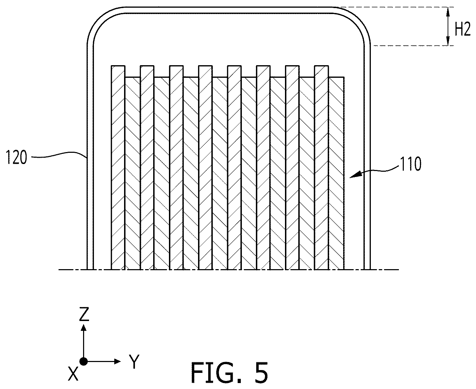

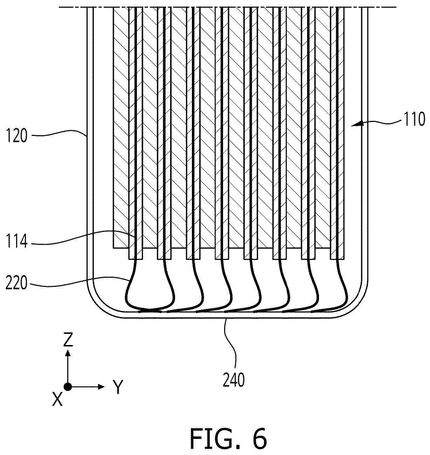

FIG. 2 is a cross-sectional view illustrating the secondary battery 100 according to some embodiments of the present disclosure. FIG. 3 illustrates an enlarged view of the region A of FIG. 2. FIG. 4 is a cross-sectional view illustrating the secondary battery 100 of FIG. 2 viewed from a B direction. FIG. 5 is a cross-sectional view illustrating the secondary battery 100 of FIG. 2 viewed from a C direction. FIG. 6 is a cross-sectional view illustrating the secondary battery 100 of FIG. 2 viewed from an E direction.

Referring to FIGS. 2 and 3, the electrode assembly 110 may have, at one end, a first horizontal portion 232, and a second horizontal portion 234 having a step difference D with respect to the first horizontal portion 232. The second horizontal portion 234 may be formed to protrude beyond the first horizontal portion 232 in a direction perpendicular to or substantially perpendicular to an upper surface 232_1 of the first horizontal portion 232. For example, the second horizontal portion 234 may protrude more in a first direction (e.g., the direction Z) than the first horizontal portion 232. A first electrode tab 142 may be disposed or formed on the first horizontal portion 232. The second horizontal portion 234 may be non-contacting with the can 120. For example, the second horizontal portion 234 may not be electrically connected to the can 120. In other words, the second horizontal portion 234 may be spaced apart from one end of the can 120 by a suitable distance (e.g., a predetermined distance). In another example, the second horizontal portion 234 may be in contact with the can 120.

A first electrode terminal 210 may be further disposed on one surface of the can 120. The first electrode terminal 210 may be disposed on the first horizontal portion 232. The first electrode tab 142 may be connected to the first electrode terminal 210. For example, the first electrode tab 142 may be a positive electrode tab, and the first electrode terminal 210 may be a positive electrode terminal. Accordingly, the positive electrode tab may be connected to the positive electrode terminal.

On an opposite surface of the can 120, facing the one surface, a second electrode substrate 220 may be disposed. For example, on a bottom portion 240 of the can 120, the second electrode substrate 220, which is a substrate portion of the second electrode 114, may be disposed. The second electrode substrate 220 may protrude in a direction perpendicular to or substantially perpendicular to the upper surface 232_1 of the first horizontal portion 232, downward. For example, the second electrode substrate 220 may be formed to protrude in a direction opposite to the first direction (e.g., opposite to the direction Z).

The second electrode substrate 220 may be connected to the can 120. For example, the second electrode substrate 220 may be welded to the can 120. For example, the second electrode substrate 220 and the can 120 may serve as a negative electrode. In an example, the second electrode substrate 220 may be welded to the bottom portion 240 of the can 120. In other words, the second electrode substrate 220 may be electrically connected to the can 120.

Referring to FIGS. 2 and 3, the first electrode terminal 210 may include a terminal portion 310, a gasket 320, a terminal plate 330, and an insulating plate 340. The terminal portion 310 may be inserted into a through-hole 312 formed on one surface of the can 120. The terminal portion 310 may be formed of copper, aluminum, an alloy of copper, or various other suitable conductive metal materials without being particularly limited. The gasket 320 is inserted into the through-hole 312 to insulate the terminal portion 310 from the can 120. The gasket 320 may be formed of an insulating material. The terminal plate 330 may be connected to the terminal portion 310 inside the can 120. The terminal plate 330 may be formed of the same material as that of the terminal portion 310. For example, the terminal plate 330 may be formed of copper, aluminum, an alloy of copper, or another suitable conductive metal material. The insulating plate 340 is disposed between the can 120 and the terminal plate 330, and insulates the terminal plate 330 from the can 120.

The first electrode tab 142 may be connected to the terminal portion 310. In other embodiments, the first electrode tab 142 may be connected to the terminal plate 330. The second horizontal portion 234 may be non-contacting with the terminal plate 330. In other words, the second horizontal portion 234 may not be electrically connected to the terminal plate 330. For example, the second horizontal portion 234 may extend in a direction parallel to or substantially parallel to an upper surface 234_1 thereof. The second horizontal portion 234 may extend until (e.g., only until) it does not come into contact with the terminal plate 330. Accordingly, it may be possible to prevent the second horizontal portion 234 from contacting the terminal plate 330.

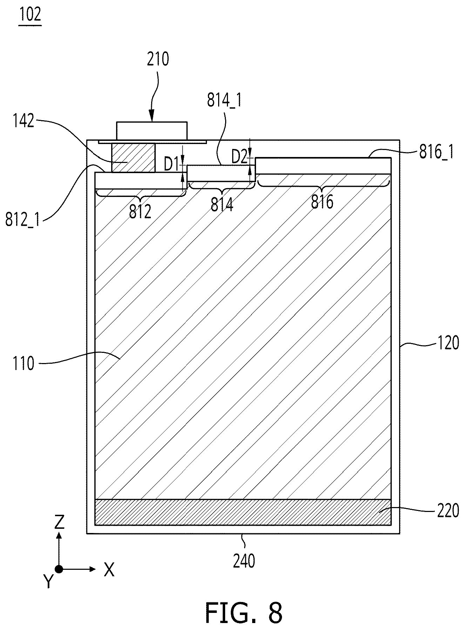

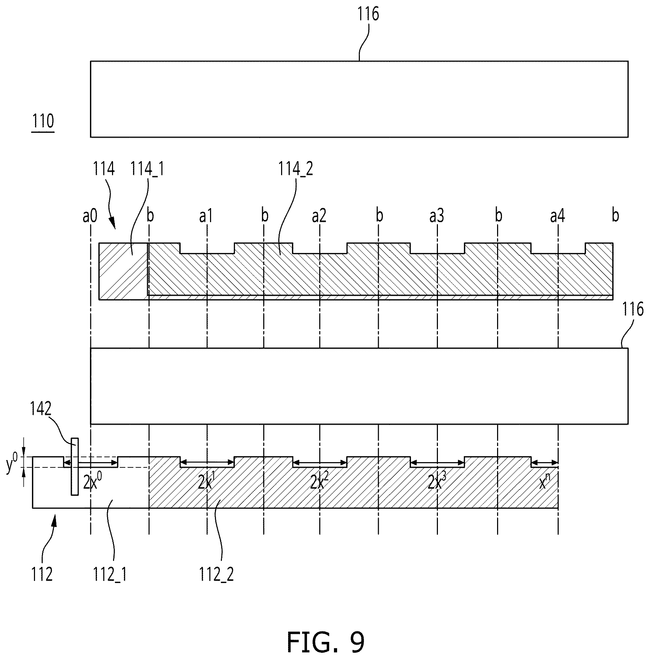

In an embodiment, referring further to FIG. 1, the separator 116 of the electrode assembly 110 may protrude farther, in a direction perpendicular to or substantially perpendicular to the upper surface 232_1 of the first horizontal portion 232 and the upper surface 234_1 of the second horizontal portion 234, than the first electrode 112 and the second electrode 114. In other words, the separator 116 may be formed to protrude more in a first direction (e.g., the direction Z) than the first electrode 112 and the second electrode 114. In this case, by cutting the separator 116 at least up to the step difference D (e.g., twice of D) at the boundary between the first horizontal portion 232 and the second horizontal portion 234 in a direction perpendicular to or substantially perpendicular to the upper surface 232_1 of the first horizontal portion 232, the first horizontal portion 232 and the second horizontal portion 234 may be formed. As will be described in more detail below with reference to FIGS. 8 and 9, when the first electrode 112 and the second electrode 114 are shaped to have a step difference (e.g., a predetermined step difference) therebetween, a separate forming process may be carried out so that the separator 116 also has the step difference D. Therefore, a cutout may be formed in the separator 116 at the boundary between the first horizontal portion 232 and the second horizontal portion 234 by an amount of at least D in the direction perpendicular to or substantially perpendicular to the upper surface 232_1 of the first horizontal portion 232. For example, after forming a cutout of at least D, a portion of the separator 116 corresponding to the first horizontal portion 232 may be trimmed or cut off, so that the separator 116 is shaped to have the step difference D. In other embodiments, after forming a cutout of at least D, the separator 116 may be folded by an amount corresponding to the first horizontal portion 232, so that the separator 116 is shaped to have the step difference D.

Referring to FIGS. 2 and 4, the first electrode 112 may be disposed as a plurality of electrodes inside the can 120. An uncoated portion of the plurality of first electrodes 112 may be bent to form a first substrate tab 132. The first electrode tab 142 may be connected to the first substrate tab 132. For example, the first substrate tab 132 and the first electrode tab 142 may be coupled to each other by welding or the like. The first electrode tab 142 may be bent in a space between the first horizontal portion 232 and the first electrode terminal 210. The bent first electrode tab 142 may be connected to the terminal plate 330 of the first electrode terminal 210. For example, the first electrode tab 142 may be coupled (e.g., welded) to the terminal plate 330. A height H1 of the space between the first horizontal portion 232 and the first electrode terminal 210 may be the height of the empty space of the can 120 on the first horizontal portion 232 after the electrode assembly 110 has been placed.

Referring to FIGS. 2, 5, and 6, the second electrode 114 may be disposed as a plurality of electrodes inside the can 120. The electrode assembly 110 including the plurality of second electrodes 114 may extend in a direction perpendicular to or substantially perpendicular to the upper surface 232_1 of the first horizontal portion 232. The first horizontal portion 232 may be non-contacting with (e.g., may not contact) the can 120. In another example, the first horizontal portion 232 may contact the can 120. By additionally placing the electrode assembly 110 at the second horizontal portion 234, the energy density of the secondary battery 100 may be improved. A height H2 of a space formed between the second horizontal portion 234 and the can 120 may be the height of the empty space of the can 120 on the second horizontal portion 234 after the electrode assembly 110 has been placed. The height H2 of the space formed between the second horizontal portion 234 and the can 120 may be lower than the height (e.g., the H1 in FIG. 4) of the space formed between the first horizontal portion 232 and the first electrode terminal 210.

Referring to FIGS. 2 and 6, the second electrode 114 may be disposed as a plurality of electrodes inside the can 120. In each of the plurality of second electrodes 114, the second electrode substrate 220 may be formed to protrude. For example, the second electrode substrate 220 may be formed to protrude downward in a direction perpendicular to or substantially perpendicular to the upper surface 232_1 of the first horizontal portion 232. In other words, the second electrode substrate 220 may be formed to protrude in a direction opposite to the first direction (e.g., the direction Z) toward the bottom portion 240 of the can 120. The second electrode substrate 220 may be coupled to the can 120. For example, the second electrode substrate 220 may be inserted into the bottom portion 240 of the can 120 by a "crimping" method, in which it is bent and inserted. In another embodiment, the second electrode substrate 220 may be welded to the bottom portion 240 of the can 120. In other embodiments, after insertion by a crimping method, the second electrode substrate 220 may be welded to the bottom portion 240 of the can 120. As such, the second electrode substrate 220 may be connected to the can 120, and the plurality of second electrodes 114 may be electrically connected to the can 120. The second electrode 114 and the can 120 may serve as a negative electrode. The can 120 may serve as a negative electrode terminal.

As described above, by shaping one end of the electrode assembly to have a step difference so as to additionally place the electrode assembly in empty space inside the can, a secondary battery having an improved energy density may be provided.

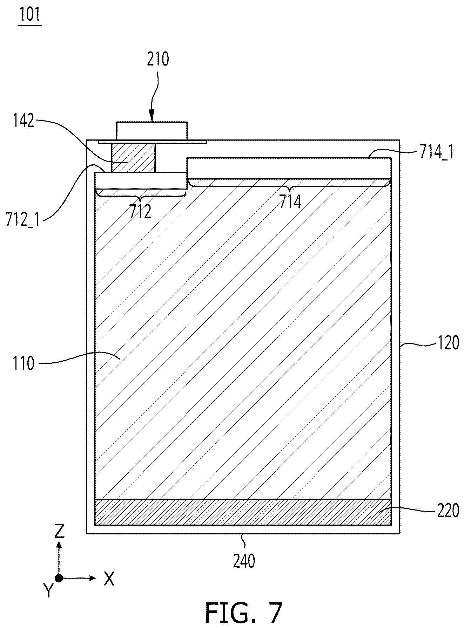

FIG. 7 is a cross-sectional view illustrating a secondary battery 101 according to some embodiments of the present disclosure.

Referring to FIG. 7, in the electrode assembly 110, a first horizontal portion 712 may be formed at one end, and a second horizontal portion 714 may be formed to have a step difference relative to the first horizontal portion 712. The second horizontal portion 714 may be formed to protrude beyond the first horizontal portion 712 in a direction perpendicular to or substantially perpendicular to an upper surface 712_1 of the first horizontal portion 712. For example, the second horizontal portion 714 may be formed to protrude beyond the first horizontal portion 712 in a first direction (e.g., the direction Z). A first electrode tab 142 may be disposed on the first horizontal portion 712. In some embodiments, the second electrode substrate 220 may be coupled to a bottom portion 240 of the can 120. A length of the second horizontal portion 714 in a direction parallel to or substantially parallel to an upper surface 714_1 thereof may be greater than a length of the first horizontal portion 712 in a direction parallel to or substantially parallel to an upper surface 712_1 thereof. For example, the second horizontal portion 714 may extend in a direction parallel to or substantially parallel to its upper surface 714_1. In an example, even if the second horizontal portion 714 extends in a direction parallel to or substantially parallel to its upper surface 714_1, it may be non-contacting with (e.g., it may not contact) the first electrode terminal 210. In other words, the second horizontal portion 714 may not be electrically connected to the first electrode terminal 210.

FIG. 8 is a cross-sectional view illustrating a secondary battery 102 according to some embodiments of the present disclosure.

Referring to FIG. 8, a first horizontal portion 812 may be formed at one end of the electrode assembly 110, and a second horizontal portion 814 may be formed to have a first step difference D1 relative to the first horizontal portion 812. The second horizontal portion 814 may be formed to protrude beyond the first horizontal portion 812 in a direction perpendicular to or substantially perpendicular to an upper surface 812_1 of the first horizontal portion 812. For example, the second horizontal portion 814 may be formed to protrude in a first direction (e.g., the direction Z) beyond the first horizontal portion 812. A first electrode tab 142 may be disposed on the first horizontal portion 812. The length of the second horizontal portion 814 in a direction parallel to or substantially parallel to its upper surface 814_1 may be the same or substantially the same as the length of the first horizontal portion 812 in a direction parallel to or substantially parallel to its upper surface 812_1. However, the present disclosure is not limited thereto, and the first horizontal portion 812 and the second horizontal portion 814 may have different lengths from each other. Even if the second horizontal portion 814 extends in a direction parallel to or substantially parallel to its upper surface 814_1, it may be non-contacting with (e.g., it may not contact) the first electrode terminal 210. In other words, the second horizontal portion 814 may not be electrically connected to the first electrode terminal 210.

In some embodiments, at one end of the electrode assembly 110, a third horizontal portion 816 may be formed to have a second step difference D2 relative to the second horizontal portion 814. The third horizontal portion 816 may be formed to protrude, in a direction perpendicular to or substantially perpendicular to the upper surface 812_1 of the first horizontal portion 812, beyond the first horizontal portion 812 and the second horizontal portion 814. For example, the third horizontal portion 816 may be formed to protrude in the first direction (e.g., the direction Z) more than the first horizontal portion 812 and the second horizontal portion 814. The second horizontal portion 814 may be formed between the first horizontal portion 812 and the third horizontal portion 816. The length of the third horizontal portion 816 in a direction parallel to or substantially parallel to its upper surface 816_1 may be greater than the length of the first horizontal portion 812 in a direction parallel to or substantially parallel to its upper surface 812_1. The length of the third horizontal portion 816 in a direction parallel to or substantially parallel to its upper surface 816_1 may also be greater than the length of the second horizontal portion 814 in a direction parallel to or substantially parallel to its upper surface 814_1. However, the third horizontal portion 816 may extend in the X direction until it does not contact the first electrode terminal 210. In other words, the third horizontal portion 816 may not be electrically connected to the first electrode terminal 210.

On an opposite surface of the can 120, facing the one surface, the second electrode substrate 220 may be disposed. For example, on the bottom portion 240 of the can 120, the second electrode substrate 220, which is a substrate portion of the second electrode 114, may be disposed. The second electrode substrate 220 may be formed to protrude downward in a direction perpendicular to or substantially perpendicular to the upper surface 232_1 of the first horizontal portion 232. For example, the second electrode substrate 220 may be formed to protrude in a direction opposite to the first direction (e.g., the direction Z).

The second electrode substrate 220 may be connected to the can 120. For example, the second electrode substrate 220 may be welded to the can 120. For example, the second electrode substrate 220 may serve as a negative electrode. The second electrode substrate 220 may be welded to the can 120. For example, the second electrode substrate 220 may be welded to the bottom portion 240 of the can 120. In other words, the second electrode substrate 220 may be electrically connected to the can 120.

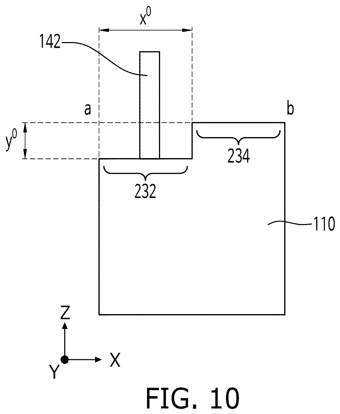

FIG. 9 illustrates a method of manufacturing an electrode assembly 110 according to some embodiments of the present disclosure. FIG. 10 illustrates the electrode assembly 110 that is assembled by the manufacturing method of FIG. 9.

Referring to FIGS. 9 and 10, the electrode assembly 110 may include the first electrode 112 and the second electrode 114. The first electrode 112 may include a first coating portion 112_2 having an active material layer coated on a substrate, and a first uncoated portion 112_1 having no active material coating formed on the substrate. The second electrode 114 may include a second coating portion 114_2 having an active material layer coated on a substrate, and a second uncoated portion 114_1 having no active material coating formed on the substrate.

In order to form a step difference, part of the first electrode 112 and the second electrode 114 may be notched. For example, by forming a step difference, the first horizontal portion 232 and the second horizontal portion 234 may be formed. For example, a step difference y0 may be formed between the first horizontal portion 232 and the second horizontal portion 234. A length x0 of the first horizontal portion 232 in a horizontal direction (e.g., the direction X) may be smaller than a length of the second horizontal portion 234 in the horizontal direction (e.g., the direction X). However, the lengths of the first horizontal portion 232 and the second horizontal portion 234 may be the same or substantially the same as each other.

Next, the first electrode tab 142 may be coupled to the first uncoated portion 112_1 of the first electrode 112. After placing the separator 116 between the first electrode 112 and the second electrode 114, the first electrode 112 and the second electrode 114 may be wound or stacked together to manufacture the electrode assembly 110. In this case, the first electrode tab 142 may be disposed on the first horizontal portion 232 by arranging the first electrode 112 and the second electrode 114 so as to ensure that the first electrode tab 142 is located thereon.

After the electrode assembly 110 is manufactured, the separator 116 may be cut, at the boundary between the first horizontal portion 232 and the second horizontal portion 234, in a direction (e.g., the direction Z) perpendicular to or substantially perpendicular to the upper surface 232_1 of the first horizontal portion 232 by at least the step difference (e.g., the y0 or the step difference D in FIG. 2). Accordingly, a cutout may be formed in the separator 116. For example, after forming the cutout by at least y0, the separator 116 may be trimmed or cut off by an amount corresponding to the first horizontal portion 232, so that the separator 116 has the step difference (e.g., the D of FIG. 2). In other embodiments, after forming the cutout by at least y0, the separator 116 may be folded by an amount corresponding to the first horizontal portion 232, so that the separator 116 has the step difference (e.g., the D of FIG. 2). In this case, the first electrode tab 142 may be disposed on the first horizontal portion 232 by winding or stacking the first electrode 112 and the second electrode 114 accordingly.

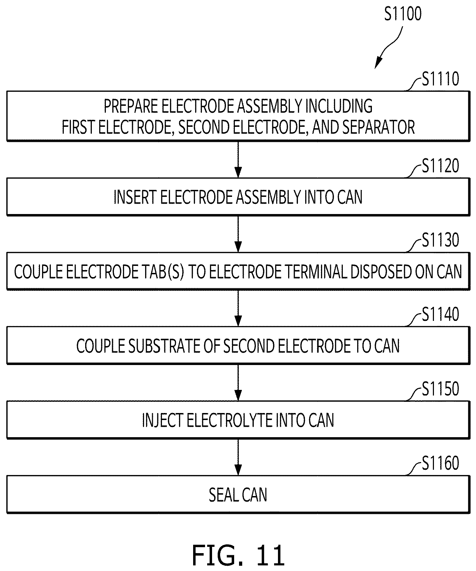

FIG. 11 is a flowchart S1100 illustrating a method of manufacturing a secondary battery according to some embodiments of the present disclosure.

Referring to FIG. 11, the method S1100 for manufacturing the secondary battery may include preparing an electrode assembly including a first electrode, a second electrode, and a separator (S1110). Then, the electrode assembly may be inserted into a can (S1120).

For example, referring to FIGS. 1 and 2, the can 120 may be a hexahedral case. The can 120 forms the overall exterior of the secondary battery 100, and may be formed of a conductive metal, such as aluminum, an aluminum alloy, or steel plated with nickel. The can 120 may include a metallic material, such as stainless use steel (SUS) or aluminum (Al). However, the present disclosure is not limited thereto, and the can 120 may be formed of various suitable metallic materials that satisfy a required or desired strength and resistance to an external impact for the secondary battery 100.

In some embodiments, the can 120 may include the body 120_1 having the receiving portion S formed therein, with one end open to accommodate the electrode assembly 110. The receiving portion S of the body 120_1 may be formed by press working or the like to create an internal space in which the electrode assembly 110 is accommodated. A planar shape of the receiving portion S of the can 120 may be, for example, rectangular or substantially rectangular. The can 120 may further include the cover 120_2, which is welded to the body 120_1 so as to seal the open end of the receiving portion S. The cover 120_2 may be formed as a flat plate placed on an upper portion of the can 120 to seal the receiving portion S. For example, the cover 120_2 may be formed as a flat plate having a suitable size to cover the body 120_1, and may come into surface contact with the body 120_1. By coupling the body 120_1 and the cover 120_2 to each other, a single joined structure may be formed.

The electrode assembly 110 may have, at one end, a first horizontal portion 232, and a second horizontal portion 234 having a step difference D with respect to the first horizontal portion 232. The second horizontal portion 234 may be formed to protrude in a direction perpendicular to or substantially perpendicular to the upper surface 232_1 of the first horizontal portion 232 more than the first horizontal portion 232. For example, the second horizontal portion 234 may be formed to protrude in a first direction (e.g., the direction Z) more than the first horizontal portion 232. A first electrode tab 142 may be disposed on the first horizontal portion 232.

On an opposite surface of the can 120, facing the one surface, a second electrode substrate 220 may be disposed. For example, on the bottom portion 240 of the can 120, the second electrode substrate 220, which is a substrate portion of the second electrode 114, may be disposed. The second electrode substrate 220 may be formed to protrude in a direction perpendicular to or substantially perpendicular to the upper surface 232_1 of the first horizontal portion 232. For example, the second electrode substrate 220 may protrude in a direction opposite to the first direction (e.g., the direction Z).

The second electrode substrate 220 may be connected to the can 120. For example, the second electrode substrate 220 may be welded to the can 120. For example, the second electrode substrate 220 may serve as a negative electrode. The second electrode substrate 220 may be welded to the can 120. For example, the second electrode substrate 220 may be welded to the bottom portion 240 of the can 120. In other words, the second electrode substrate 220 may be electrically connected to the can 120.

Then, the electrode tab may be coupled to the electrode terminal disposed on the can 120 (S1130). The substrate of the second electrode may be coupled to the can 120 (S1140). For example, referring to FIGS. 2 and 6, the first electrode terminal 210 may be further disposed on one surface of the can 120. The first electrode terminal 210 may be disposed on the first horizontal portion 232. The first electrode tab 142 may be connected to the first electrode terminal 210. For example, the first electrode tab 142 may be a positive electrode tab, and the first electrode terminal 210 may be a positive electrode terminal. Accordingly, the positive electrode tab may be connected to the positive electrode terminal.

The second electrode substrate 220 of the second electrode 114 may protrude from each of the plurality of second electrodes 114. For example, the second electrode substrate 220 may be formed to protrude downward in a direction perpendicular to or substantially perpendicular to the upper surface 232_1 of the first horizontal portion 232. In other words, the second electrode substrate 220 may be formed to protrude in a direction opposite to the first direction (e.g., the direction Z) toward the bottom portion 240 of the can 120. The second electrode substrate 220 may be coupled to the can 120. For example, the second electrode substrate 220 may be inserted into the bottom portion 240 of the can 120 by a "crimping" method, in which it is bent and inserted. In another embodiment, the second electrode substrate 220 may be welded to the bottom portion 240 of the can 120. In other embodiments, after insertion by crimping, the second electrode substrate 220 may be welded to the bottom portion 240 of the can 120. As such, the second electrode substrate 220 may be coupled to the can 120, and the plurality of second electrodes 114 may be electrically connected to the can 120. The second electrode 114 may serve as a negative electrode. The can 120 may serve as a negative electrode terminal.

An electrolyte may be injected into the can 120 through an electrolyte injection port (S1150). For example, the electrolyte injection port may be a through-hole formed on at least one side surface of the can 120, and may be formed so that the electrolyte is injected into the can 120 after the body 120_1 and the cover 120_2 are coupled to each other and sealed. After the electrolyte is injected, the electrolyte injection port may be sealed with a sealing member.

By sealing the can (S1160), the secondary battery may be manufactured. In another embodiment, the can may be sealed first, and then the electrolyte may be injected into the can.

As described above, by forming one end of the electrode assembly to have a step difference so as to additionally dispose the electrode assembly within an empty space inside the can, it may be possible to provide a secondary battery having an improved energy density. In addition, by employing a can formed of a metal as an exterior material of the secondary battery, a detachment of the secondary battery may be facilitated.

The flowchart described above with reference to FIG. 11 illustrate an embodiment of the present disclosure, and the present disclosure is not limited thereto. For example, one or more processes in the flowchart may be added, changed, or deleted, the order of one or more processes may be changed, or one or more processes may be performed concurrently (e.g., simultaneously or substantially simultaneously) with each other.

The foregoing is illustrative of some embodiments of the present disclosure, and is not to be construed as limiting thereof. Although some embodiments have been described, those skilled in the art will readily appreciate that various modifications are possible in the embodiments without departing from the spirit and scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the spirit and scope of the present disclosure as defined in the appended claims, and their equivalents.

### DESCRIPTION OF SOME REFERENCE SYMBOLS

100: secondary battery
110: electrode assembly
112: first electrode
114: second electrode
116: separator
120: can
120_1: body
S: receiving portion
120_2: cover
132: first substrate tab
142: first electrode tab

## Claims

1. A secondary battery (100) comprising:
an electrode assembly (110) comprising:
a first electrode (112), a second electrode (114), and a separator (116) between the first electrode (112) and the second electrode (114);
a first horizontal portion (232) at one end of the electrode assembly (110); and
a second horizontal portion (234) having a step difference D relative to the first horizontal portion (232);
a can (120) accommodating the electrode assembly (110); and
a first electrode tab (142) connected to the first electrode (112),
wherein the second electrode (114) is coupled to the can (120).

2. The secondary battery (100) according to claim 1, wherein the second horizontal portion (234) protrudes beyond the first horizontal portion (232) in a direction perpendicular to an upper surface (232_1) of the first horizontal portion (232).

3. The secondary battery (100) according to claim 1 or 2, wherein the first electrode tab (142) is on the first horizontal portion (232).

4. The secondary battery (100) according to any one of the preceding claims, further comprising:
a first electrode terminal (210) on one surface of the can (120),
wherein the first electrode tab (142) is connected to the first electrode terminal (210).

5. The secondary battery (100) according to claim 4, wherein the first electrode tab (142) is bent in a space between the first horizontal portion (232) and the first electrode terminal (210).

6. The secondary battery (100) according to claim 4 or 5, wherein the first electrode terminal (210) comprises:
a terminal portion (310) inserted into a through-hole (312) penetrating the one surface of the can (120);
a gasket (320) inserted into the through-hole (312) to insulate the terminal portion (310) from the can (120);
a terminal plate (330) connected to the terminal portion (310) inside the can (120);
and an insulating plate (340) between the can (120) and the terminal plate (330) to insulate the terminal plate (330) from the can (120).

7. The secondary battery (100) according to claim 6, wherein the first electrode tab (142) is connected to the terminal plate (330).

8. The secondary battery (100) according to claim 6 or 7, wherein the second horizontal portion (234) does not contact the terminal plate (330).

9. The secondary battery (100) according to any one of the preceding claims, wherein a length of the second horizontal portion (234) in a direction parallel to an upper surface (234_1) of the second horizontal portion (234) is greater than a length of the first horizontal portion (232) in a direction parallel to an upper surface (232_1) of the first horizontal portion (232).

10. The secondary battery (100) according to any one of the preceding claims, wherein the can (120) comprises a metallic material, and
the metallic material comprises at least one of aluminum, an aluminum alloy, or stainless steel.

11. The secondary battery (100) according to any one of the preceding claims, wherein a substrate (220) of the second electrode (114) is welded to the can (120).

12. A secondary battery (102) comprising:
an electrode assembly (110) comprising:
a first electrode (112), a second electrode (114), and a separator (116) between the first electrode (112) and the second electrode (114);
a first horizontal portion (812) at one end of the electrode assembly (110);
a second horizontal portion (814) having a first step difference D1 relative to the first horizontal portion (812); and
a third horizontal portion (816) having a second step difference D2 relative to the second horizontal portion (814);
a can (120) accommodating the electrode assembly (110); and
a first electrode tab (142) connected to the first electrode (112),
wherein the second electrode (114) is coupled to the can (120).

13. The secondary battery (102) according to claim 12, wherein the second horizontal portion (814) is located between the first horizontal portion (812) and the third horizontal portion (816).

14. The secondary battery (102) according to claim 12 or 13, wherein the second horizontal portion (814) protrudes beyond the first horizontal portion (812) in a direction perpendicular to an upper surface (812_1) of the first horizontal portion (812), and
the third horizontal portion (816) protrudes beyond the second horizontal portion (814) in the direction perpendicular to the upper surface (812_1) of the first horizontal portion (812).

15. The secondary battery (102) according to any one of the preceding claims 12 to 14, wherein the first electrode tab (142) is located on the first horizontal portion (812).
